Europäisches Patentamt

(19) European Patent Office

Office européen des brevets

(11) Numéro de publication: **0 082 027**
**B1**

(12) **FASCICULE DE BREVET EUROPEEN**

(45) Date de publication du fascicule du brevet:
**27.12.85**

(51) Int. Cl.⁴: **B 62 D 5/083**

(21) Numéro de dépôt: **82401836.0**

(22) Date de dépôt: **06.10.82**

(54) Distributeur rotatif hydraulique pour servomécanisme à vérin dissymétrique.

(30) Priorité: **03.12.81  FR 8122656**

(43) Date de publication de la demande:
**22.06.83 Bulletin 83/25**

(45) Mention de la délivrance du brevet:
**27.12.85 Bulletin 85/52**

(84) Etats contractants désignés:
**DE FR GB IT**

(56) Documents cités:
**DE - A - 2 845 301**
**FR - E - 88 627**
**GB - A - 1 535 722**
**GB - A - 2 062 560**

(73) Titulaire: **BENDIX France, Centre Paris Pleyel,**
**F-93521 St-Denis Cédex 01 (FR)**

(72) Inventeur: **Tanguy, Christian, 34Bis Avenue Gaston**
**Bourry, F-95740 Frepillon (FR)**

(74) Mandataire: **Poidatz, Emmanuel et al, Service Brevets**
**Bendix 44 rue François 1er, F-75008 Paris (FR)**

BUNDESDRUCKEREI BERLIN

## Description

L'invention concerne un distributeur rotatif de fluide hydraulique pour servomécanisme utilisable notamment dans un système de servodirection d'une automobile; elle concerne plus particulièrement une adaptation du distributeur décrit dans la demande de brevet européen EP-A-72 712 publiée le 23-02-83 (état de la technique, selon Art. 54(3) CBE), permettant de commander un vérin d'assistance du type dissymétrique.

Le distributeur décrit dans la demande de brevet européen EP-A-72 712 comporte un boîtier fixe renfermant deux éléments de distributeur munis de parties cylindriques coaxiales, respectivement un élément de distributeur externe et un élément de distributeur interne monté tournant dans un alésage axial de l'élément de distributeur externe et susceptible d'une rotation relative limitée par rapport à ce dernier, de part et d'autre d'une position relative neutre, dans lequel ces éléments de distributeur comportent des ouvertures et cavités définissant un circulation de fluide connectable entre une source de fluide et un réservoir de fluide, d'une part et entre les deux chambres d'un vérin d'assistance, d'autre part, le circuit comportant des passages à section variable définis dans les surfaces cylindriques de contact desdits éléments de distributeur, matérialisé par:

— des rainures longitudinales, connues en soi, réparties régulièrement à la surface externe de l'élément de distributeur interne;
— des perçages diamétraux pratiqués à intervalles réguliers dans l'élément de distributeur externe de façon à y former, chacun, un orifice traversant et un évidement borgne, respectivement opposés et positionnés en regard de portées lisses dudit élément de distributeur interne entre des bords adjacents de deux rainures voisines dans ladite position neutre; et
— des perçages d'évacuation communiquant avec un moyen de raccordement au réservoir, formés radialement dans l'élément interne, et débouchant sur les portées lisses précitées qui correspondent auxdits évidements.

Dans un tel dispositif, les entrées et sorties de fluide s'effectuent au moyen d'orifices pratiqués dans le boîtier et débouchant dans des espaces annulaires définis entre la surface interne dudit boîtier et la surface externe de l'élément de distributeur externe, ces espaces annulaires étant séparés les uns des autres par des joints d'étanchéité annulaires. La présente invention a pour objet une adaptation du distributeur défini ci-dessus, en l'occurrence une modification de ces espaces annulaires pour l'adaptation du distributeur à la commande d'un vérin d'assistance dissymétrique.

Ainsi, la présente invention concerne un distributeur rotatif de fluide hydraulique pour servomécanisme, du type défini ci-dessus, pour utilisation avec un vérin d'assistance dissymétrique, le distributeur comportant un boîtier fixe dans lequel sont définis un orifice de raccordement à une pompe et deux orifices de raccordement aux deux chambres dudit vérin, respectivement en communication avec des espaces annulaires définis entre la surface interne dudit boîtier et la surface externe de l'élément de distributeur externe, l'orifice de raccordement à la pompe et un orifice de raccordement à l'une des chambres du vérin communiquant avec le même espace annulaire tandis que l'orifice de raccordement à l'autre chambre du vérin communique avec un autre espace annulaire dans lequel débouchent des perçages radiaux pratiqués dans ledit élément de distributeur externe en regard d'une rainure longitudinale sur deux de l'élément de distributeur interne.

Autrement dit, par rapport à la structure décrite dans la demande de brevet sus-mentionnée, il suffit de réaliser un espace annulaire plus large entre la surface interne du boîtier et la surface externe de l'élément de distributeur externe et de modifier la répartition des perçages radiaux dans l'élément de distributeur externe pour que le distributeur soit apte à commander un vérin dissymétrique. Cette solution présente l'avantage de ne rien changer à l'élément de distributeur interne et surtout au boîtier fixe, c'est-à-dire au réseau de raccordement entre ce dernier et les autres élémentes du système de servodirection (pompe, réservoir et vérin), les modifications apportées à l'élément externe demeurant mineures.

L'invention sera mieux comprise à la lumière de la description qui va suivre d'un distributeur conforme à la définition qui précède donnée uniquement à titre d'exemple et faire en référence au dessin annexé dans lequel:

— la figure 1 est un demi-coupe axiale d'un distributeur selon l'invention, les autres éléments du système de servodirection étant représentés schématiquement ainsi que le réseau de brachements entre le distributeur; et

— la figure 2 est une coupe II-II de la figure 1.

Le distributeur rotatif représenté comporte un élément de distributeur externe 111 cylindrique, terminé par une portion d'engrenage 112 coopérant avec la crémaillère (non représentée) du système de direction d'un véhicule automobile, et un élément de distributeur interne 113 dont une partie cylindrique est montée en rotation dans un alésage axial 114 de l'élément de distributeur externe. Ce dernier est lui-même monté en rotation dans un boîtier fixe 115. L'élément de distributeur externe 111 est monté en rotation dans ce boîtier. Il est guidé en rotation par l'une de ses extrémités 116 au voisinage de la portion à engrenage 112 et dans sa partie médiane grâce à une bague 117 emmanchée à force dans le boîtier 115. Un joint annulaire d'étanchéité 118 marque la séparation entre le logement du distributeur proprement dit et celui de la crémaillère. Le positionnement axial de l'élément de distributeur interne 113 est assuré par un roulement à bille 119 intercalé entre sa surface externe et la surface interne du boîtier 115. Un joint d'étanchéité 120 renforcé par une coupelle annulaire 121 est également montée entre la surface interne du boîtier 115 et la surface externe de l'élément de distributeur 113 de sorte que la partie termionale 122 de ce dernier fait saillie au-delà de l'ouverture du boîtier 115. Cette partie terminale 122 est destinée à être reliée à la colonne de direction du véhicule. Une barre de torsion 123 est logée à l'intérieur d'une cavité axiale 124 de l'élément de distributeur interne 113. Cette barre de torsion est reliée par l'une de ses extrémités 125 à l'élément de distributeur externe 111 par l'intermédiaire d'une goupille 126 et par son autre extrémite 127 à élément de distributeur 113 par l'intermédiaire d'une goupille 128. L'état de repos de la barre de torsion 123 définit une position relative neutre entre les deux éléments de distributeur. Le boîtier 115 comporte un orifice de raccordement 129 à une source de fluide (la pompe 160) un orifice de raccordement 130 à un réservoir de fluide 161 et deux orifices de raccordement 131, 132 aux deux chambres 162a et 162b d'un vérin d'assistance dissymétrique 162. Bien entendu, la tige 163 de ce vérin est mécaniquement couplée à la crémaillère précitée. De façon classique, le diamètre de la tige 163 est calculé pour réduire de moitié la surface utile S du piston dans la chambre 162a. L'orifice de raccordement 130 communique avec la cavité axiale 124 par l'intermédiaire d'au moins un perçage radial 136 pratiqué dans l'élément de distributeur 111. Les orifices de raccordement 129, 130, 131 et 132 constituent les entrées et sorties d'un circuit de circulation de fluide constitué par des ouvertures et cavités définies dans les éléments de distributeur 111 et 113. Des joints annulaires 138 disposés à la surface externe de l'élément de distributeur 111 assurent une séparation étanche entre des passages annulaires 133 et 135 définis entre la surface interne de l'alésage du boîtier et la surface externe de l'élément de distributeur 111.

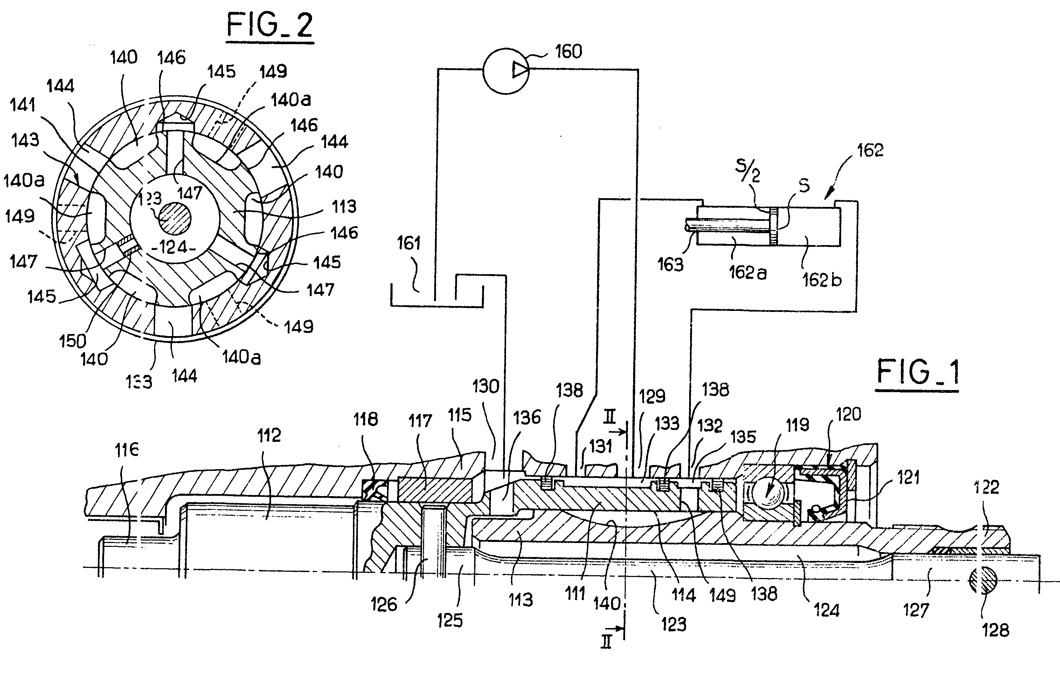

La figure 2 montre plus particulièrement la structure du circuit de circulation précité, celui-ci est matérialisé par:

— des rainures longitudinales 140, au nombre de six, connues en soi, réparties régulièrement à la surface externe de l'élément de distributeur interne 113;

— des perçages borgnes diamétraux 143, au nombre de trois, pratiqués à intervalles réguliers dans l'élément de distributeur externe 111 de façon à y définir, chacun, un orifice traversant 144 et un évidement 145 respectivement opposés et positionnés en regard de portées lisses 146 de l'élément de distributeur interne 113 entre les bords adjacents de deux rainures voisines 140 dans la position neutre représentée; et

— des perçages d'évacuation 147 débouchant sur les portées lisses 146 qui correspondent aux évidements 145, ces perçages communiquant par ailleurs avec la cavité axiale 124 et étant par conséquent reliés à l'orifice de raccordement 130.

Les perçages borgnes 143 sont tous dans un même plan et débouchent dans le passage annulaire 133. Ils sont décalés de 120° les uns par rapport aux autres. Ainsi, chaque orifice traversant 144 est en communication avec la pompe 160 tandis que tous les évidements 145 sont en communication permanente, par l'intermédiaire des perçages d'évacuation 147, avec la cavité axiale 124, c'est-à-dire avec le réservoir 161. La coopération des arêtes des rainures 140 et des bords des orifices 144 et évidements 145 permet de définir les passages à section variable du distributeur dans les surfaces cylindriques de contact des éléments de distributeur 111 et 113. Les perçages borgenes 143 ont des diamètres différents pour définir des passages à fermetures successives, en fonction de la rotation relative d'un élément de distributeur par rapport à l'autre. En fait, il est surtout important que ce soient les évidements 145 qui présentent des diamètres différents puisque c'est la fermeture des passages définis au voisinage de ces évidements qui conditionnent la caractéristique du distributeur. Autrement dit, les orifices 144 peuvent être réalésés à un diamètre supérieur après le forage des évidements 145. Une restriction d'écoulement, matérialisée par une bague 150 montée à force dans le perçage d'évacuation 147 correspondant à l'évidement 145 de plus grand diamètre, permet d'éviter la cavitation et par conséquent les bruits de fonctionnement qui en découlent.

Si les conditions d'usinage ne permettent pas de réaliser les alésages borgnes (évidements 145) avec une précision suffisante, on peut effectuer, à leur niveau, des perçages traversants radiaux ou diamétraux, en rebouchant les alésages ainsi formés sur la partie extérieure de l'épaisseur de la paroi de l'élément de distributeur externe 111 par un insert métallique afin de reconstituer ainsi les évidements non-traversants 145.

Selon la présente invention, l'orifice de raccordement 129 à la pompe 160 et l'orifice de raccordement 131 à la chambre 162a du vérin communiquent avec le même espace annulaire 133 axialement élargi tandis que l'orifice de raccordement 132 à l'autre chambre 162b du vérin communique avec l'autre espace annulaire 135 dans lequel débouchent des perçages radiaux 149 pratiqués dans l'élément de distributeur externe 111 en regard d'une rainure longitudinale sur deux de l'élément de distributeur interne 113, ces rainures 140a étant séparées les unes des autres de 120° pour un élément de distributeur interne à six rainures telles que représentées.

Comme mentionné précédemment, les seules modifications de structure par rapport au distributeur décrit dans la demande de brevet susmentionnée concernent l'élément de distributeur externe 111. Les branchements extérieurs restent inchangés. Il apparaît clairement que la chambre 162a du vérin 162 communique en permanence avec la pompe 160 par l'intermédiaire du passage annulaire 133 et que le distributeur permet de commander les variations de pression dans la chambre 162b du vérin, exclusivement.

## Revendication

Distributeur rotatif de fluide hydraulique pour servomécanisme comportant un vérin d'assistance dissymétrique (162), notamment pour système de direction assistée dans un véhicule automobile, du type comportant deux éléments de distributeur munis de parties cylindriques coaxiales, respectivement un élément de distributeur externe (111) monté dans un boîtier fixe (115) et un élément de distributeur interne (113) monté à rotation dans un alésage axial (114) de l'élément externe et susceptible d'une rotation relative limitée par rapport à ce dernier, de part et d'autre d'une position relative neutre, les éléments de distributeur comportant des ouvertures et cavités définissant un circuit de circulation de fluide connectable entre une source de fluide sous pression (160) et un réservoir de fluide (161), ce circuit comportant des passages à section variable définis dans les surfaces cylindriques de contact desdits éléments de distributeur, et étant matérialisé par des rainures longitudinales (140, 140a), angulairement réparties à la surface externe de l'élément de distributeur interne (113); des paires d'orifices traversants (144) et d'évidements (145) respectivement diamétralement opposés deux à deux, percés radialement dans l'élément de distributeur externe (111) et positionnés, dans ladite position neutre, en regard de portées lisses (146) de l'élément de distributeur interne entre les bords adjacents de deux rainures voisines de ce dernier; et par des perçages d'évacuation (147), communiquant avec un moyen de raccordement (124, 136, 130) au réservoir, formés radialement dans l'élément de distributeur interne et débouchant sur les portées lisses précitées qui correspondent auxdits évidements (145), le distributeur comportant, définis dans le boîtier (115), un orifice de raccordement (129) à la source de fluide sous pression (160) et deux orifices de raccordement (131, 132) aux deux chambres respectives (162a, 162b) du vérin (162), respectivement en communication avec des espaces annulaires (133, 135) axialement définis entre la surface interne du boîtier (115) et la surface externe de l'élément de distributeur externe (111), l'orifice de raccordement (129) à la source de fluide sous pression (160) et l'un (131) des orifices de raccordement à l'une (162a) des chambres du vérin communiquant avec le même espace annulaire (133), tandis que l'orifice de raccordement (132) à l'autre chambre (162b) du vérin communique avec un autre espace annulaire (135) dans lequel débouchent des perçages radiaux (149) pratiqués dans l'élément de distributeur externe (111) en regard d'une rainure longitudinale (140a) sur deux de l'élément de distributeur interne (113).

## Patentanspruch

Hydraulischer Rotationsverteiler für einen Servomechanismus mit einem asymmetrischen Kraftzylinder (162), insbesondere für eine Lenkhilfe in einem Kraftfahrzeug, mit zwei Verteilerelementen, die mit koaxialen zylindrischen Abschnitten versehen sind, und zwar einem äußeren Verteilerelement (111), das in einem festgelegten Gehäuse (115) angebracht ist, und einem inneren Verteilerelement (113), das in einer Axialbohrung (114) des äußeren Verteilerelementes drehbar gelagert ist und bezüglich des letzteren eine begrenzte Relativdrehung beidseitig zu einer Neutralstellung ausführen kann, wobei die Verteilerelemente Öffnungen und Ausnehmungen aufweisen, die einen Strömungsmittelkreis bilden, der zwischen einer Druckquelle (160) und einem Strömungsmittelreservoir (161) anschließbar ist, wobei der Strömungsmittelkreis querschnittsveränderliche Kanäle aufweist, die in den zylindrischen Berührungsflächen der Verteilerelemente gebildet sind, und der gebildet wird von Längsnuten (140, 140a), die in Umfangsrichtung über der Außenfläche des inneren Verteilerelementes (113) verteilt sind, von Paaren von Querbohrungen (144) und Ausnehmungen (145), die paarweise diametral gegenüberliegend angeordnet sind, radial in das äußere Verteilerelement (111) gebohrt sind und in der Neutralstellung Durchlässen (146) des inneren Verteilerelementes zwischen den angrenzenden Rändern zweier benachbarter Nuten des letzteren gegenüberliegen, und von Entlüftungsbohrungen (147), die mit einem Anschluß (124, 136, 130) des Reservoirs in Verbindung stehen, radial in dem inneren Verteilerelement gebildet sind und in die genannten Durchlässe münden, die den besagten Ausnehmungen (145) entsprechen, wobei der Verteiler in dem Gehäuse (115) aufweist: eine Anschlußöffnung (129) zum Anschluß an der Druckquelle (160) und zwei Anschlußöffnungen (131, 132) zum Anschluß an zwei entsprechenden Kammern (162a, 162b) des Kraftzylinders (162), die jeweils mit Ringräumen (133, 135) in Verbindung stehen, die axial zwischen der Innenseite des Gehäuses (115) und der Außenseite des äußeren Verteilerelementes (111) gebildet sind, wobei die Anschlußöffnung (129) zum Anschluß an der Druckquelle (160) und die eine (131) der Anschlußöffnungen zum Anschluß an einer (162a) der Kammern des Kraftzylinders mit demselben Ringraum (133) in Verbindung stehen, während die Anschlußöffnung (132) zum Anschluß an der anderen Kammer (162b) des Kraftzylinders mit einem anderen Ringraum (135) in Verbindung steht, in den radiale Bohrungen (149) münden, die in dem äußeren Verteilerelement (111) gegenüber einer (140a) von zwei Längsnuten des inneren Verteilerelementes (113) gebildet sind.

## Claim

A rotary hydraulic distributor for a servo mechanism comprising an asymmetrical servo motor (162) in particular for a servo steering system in an automotive vehicle of the type comprising a pair of distributor elements provided with coaxial cylindrical portions, i. e. an external distributor element (111) mounted in a fixed casing (115) and an internal distributor element (113) mounted for rotation in an axial bore (114) of the external element and adapted to perform a limited relative rotation with respect to the latter in opposite directions from a relative neutral position, the distributor elements comprising openings and cavities defining a fluid circuit connectable between a fluid pressure source (160) and a fluid reservoir (161), said circuit comprising passages of variable cross section defined in the cylindrical contact surfaces of said distributor elements and comprised of longitudinal grooves (140, 140a) circumferentially spaced on the external surface of the internal distributor element (113); pairs of traverse orifices (144) and recesses (145) diametrically opposed in pairs, radially extending through the external distributor element (111) and positioned, in said neutral position, opposite ports (146) of the internal distributor element between adjacent edges of two associated grooves of the latter; and of evacuation bores (147) communicating with means (124, 136, 130) for connection to the reservoir, formed radially in the internal distributor element and opening into said ports corresponding to said recesses (145), the distributor comprising in the casing (115) an orifice (129) for connection to the fluid pressure source (160) and two orifices (131, 132) for connection to two respective chambers (162a, 162b) of the servo motor (162), respectively in communication with annular spaces (133, 135) axially defined between the internal surface of the casing (115) and the external surface of the external distributor element (111), the orifice (129) for connection to the fluid pressure source (160) and the one (131) of the orifices for connection to the one (162a) of the chambers of the servo motor communicating with the same annular space (133), while the orifice (132) for connection to the other chamber (162b) of the servo motor communicates with another annular space (135) into which radial bores (149) open, which radial bores are formed in the external distributor element (111) opposite to one longitudinal groove (140a) of two of said internal distributor element (113).

FIG_2

FIG_1

0 082 027